# DEMANDE DE BREVET EUROPEEN

(11) **EP 0 637 117 A1**
(43) Date de publication de la demande: **01.02.1995**
(21) Numéro de dépôt: 94401696.3
(22) Date de dépôt: 22.07.1994
(51) Int. Cl.: H02G 15/18, H02G 1/14

(54) **Support de positionnement d'un manchon retractable**

(30) Priorité: 26.07.1993 FR 9309166
(71) Demandeur: ALCATEL CABLE, F-92100 Clichy (FR)
(72) Inventeur: Mirebeau, Pierre, F-91140 Villebon (FR); Cardinaels, Jozef, B-9080 Lochristi (BE)
(74) Mandataire: Buffiere, Michelle

(57) **Abrégé**

Le support de positionnement d'un manchon rétractable est constitué par un corps tubulaire rigide de maintien du support en expansion.
Il est caractérisé en ce que le corps tubulaire comporte une série de bagues annulaires parallèles, chacune pourvue d'une part de zones de rupture (31 à 34) et d'autre part d'attaches de liaison (41 à 44) de cette bague à celle adjacente, les attaches étant de part et d'autre de chaque zone de rupture.

Application: mise en place du manchon sur un élément rigide, tel qu'une jonction ou une terminaison de câbles.

## Description

La présente invention porte sur un support de positionnement d'un manchon rétractable, portant et retenant le manchon préalablement expansé, pour la mise en place de ce manchon sur un élément rigide.

Le manchon expansé se rétracte sur l'élément rigide, au fur et à mesure de sa mise en place sur ce dernier. Il assure alors une protection efficace de l'élément. Cet élément rigide est en particulier une jonction de câbles moyenne, haute ou très haute tension, ou une terminaison de câble d'énergie, ou tout autre élément à protéger par un tel manchon.

Le manchon est élastique et est retenu expansé sur ou dans le support prévu résistant radialement. Son positionnement sur l'élément est assuré en enfilant sur l'élément le support et le manchon expansé et en dégageant ensuite le support relativement au manchon et à l'élément.

Le document US-A-3515798 décrit un tel support, le manchon rétractable étant retenu en expansion sur sa périphérie. Pour le dégagement du support du dessous du manchon expansé et le positionnement et la rétraction résultants du manchon sur l'élément, ce support est constitué par un corps tubulaire rainuré hélicoïdalement, définissant une suite de spires hélicoïdales, jointives et solidaires les unes des autres par leurs bords, le long de la rainure hélicoïdale continue de résistance réduite, dite ligne hélicoïdale de rupture. Les spires sont successivement désolidarisées les unes des autres et défaites et dégagées du dessous du manchon, en tirant, par une extrémité dite arrière du support, sur la spire terminale de l'extrémité avant du support et sur les spires suivantes. A cet effet cette spire terminale avant se prolonge dans le support et le long de celui-ci, en définissant un bras de traction accessible sur l'extrémité arrière du support, de manière à permettre la rétraction du manchon sur l'élément au fur et à mesure que les spires sous-jacentes avant sont défaites et dégagées du dessous du manchon.

L'opération de positionnement du manchon sur l'élément est longue et fastidieuse. En effet, elle nécessite que la longueur des spires défaites soit tournée au fur et à mesure de son dégagement autour de l'extrémité arrière du support, pour dérouler les spires successivement désolidarisées les unes des autres. Elle impose de disposer d'un espace libre important au delà de l'extrémité arrière du support, pour le déroulement et le dégagement des spires. Elle peut en outre entraîner un blocage des spires autour de l'élément et leur rupture résultante.

Le document WO-A-93 22816 décrit un support tubulaire qui est constitué à partir d'une feuille flexible et fendue partiellement pour définir un serpentin. Cette feuille est pliée en tube, le serpentin formant alors des spires annulaires sur le tube. Le tube est fermé en long par un système d'agrafage à série de pattes et d'encoches d'agrafage prévues sur les bords de fermeture de la feuille pliée. Les spires se défont par déroulement alternativement dans un sens et l'autre, tandis que le tube s'ouvre au fur et à mesure le long de la ligne de fermeture.

Ce support nécessite également un espace libre important au-delà de son extrémité arrière, pour le dégagement des spires déroulées et peut également entraîner un blocage de l'une des spires autour de l'élément, au cours de son déroulement.

La présente invention a pour but de réaliser un support de positionnement de manchon rétractable, de mise en oeuvre aisée et rapide, qui évite les inconvénients précités.

Elle a pour objet un support de positionnement d'un manchon rétractable, constitué par un corps tubulaire rigide de maintien en expansion du manchon pour le positionnement ultérieur et la rétraction dudit manchon sur un élément, comportant une série de bagues annulaires, parallèles les unes aux autres sur la longueur dudit corps et pourvues chacune d'une part d'une zone de rupture et d'autre part d'une attache résistante de liaison à chaque bague adjacente, pour défaire les bagues successives par déroulement alterné dans un sens et l'autre lors d'une traction sur l'une des bagues terminales de la série, caractérisé en ce que lesdites bagues comportent chacune plusieurs zones de rupture, divisant chaque bague en secteurs annulaires de longueur sensiblement identique, ainsi que plusieurs attaches de liaison, les différentes zones de rupture des bagues de la série étant sensiblement alignées sur autant de différentes lignes génératrices et ces lignes génératrices délimitant entre elles le long dudit corps autant de différents jeux de secteurs annulaires, et en ce lesdites attaches de liaison sont associées deux à deux en étant séparées l'une de l'autre par l'une des zones de rupture et relient les secteurs annulaires adjacents les uns aux autres le long dudit corps.

Ce support présente avantageusement en outre au moins l'une des caractéristiques additionnelles suivantes:
- lesdites bagues successives sont séparées les unes des autres par des jeux d'empreintes, lesdites empreintes étant discontinues sur la périphérie dudit corps, s'étendant sensiblement chacune entre l'une desdites lignes génératrices à une suivante sur ledit corps et ayant chacune une première extrémité située en regard de l'une des deux lignes génératrices concernées, en étant séparée de cette ligne génératrice par l'une des attaches de liaison, et une deuxième extrémité située sur l'autre des deux lignes génératrices concernées.
- lesdites empreintes et lesdits secteurs annulaires sont inclinés relativement au plan transversal du corps, les coupant individuellement, l'angle d'inclinaison étant alternativement dans un sens et dans le sens opposé sur deux secteurs annulaires successifs de la même bague.
- l'angle d'inclinaison est de l'ordre d'une vingtaine de degrés.

Les caractéristiques et avantages de la présente invention ressortiront de la description faite ci-après d'exemples de réalisation illustrés dans les dessins ci-annexés. Dans ces dessins:
- La figure 1 est une vue en élévation partiellement coupée d'un support de positionnement d'un manchon rétractable, du type de celui de la présente invention,
- La figure 2 est une vue en élévation d'une variante de réalisation du support de la figure 1,
- La figure 3 est une vue développée en plan d'un mode préféré de réalisation du support selon l'invention,
- La figure 4 illustre schématiquement le support de la figure 3 rendu tubulaire,
- La figure 5 est une vue partielle montrant à échelle agrandie une variante de réalisation du support de la figure 3, pour une variante d'assemblage donnée par rapport à la figure 4.

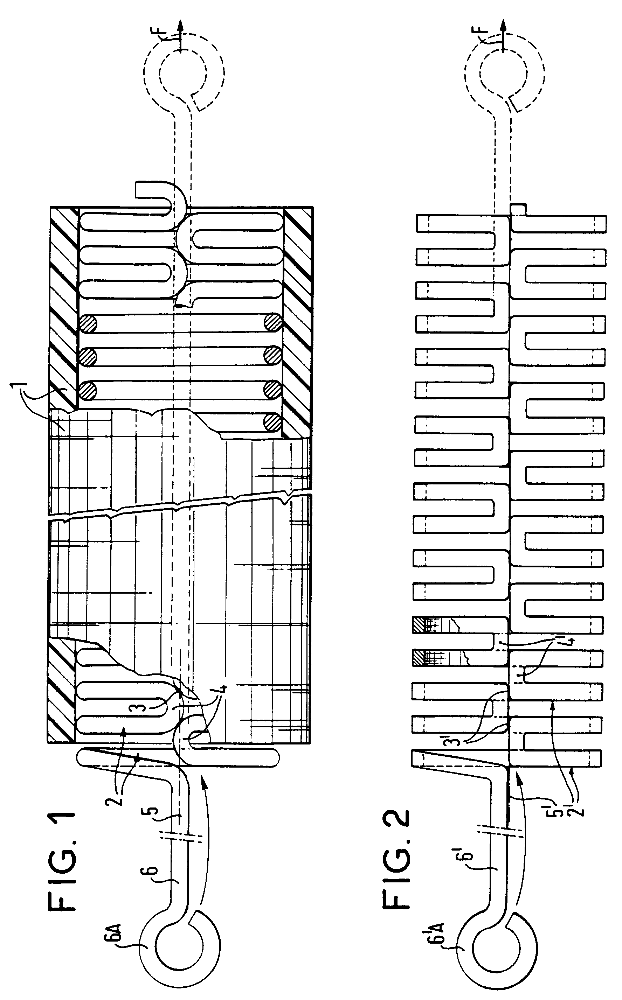

La figure 1 montre un support rigide et de forme tubulaire, retenant en expansion un manchon élastique 1, pour le positionnement ultérieur et de la rétraction simultanée de ce manchon sur un élément cylindrique, non représenté. Ce manchon expansé est montré retenu sur le support. Il peut en variante de manière connue être retenu contre la surface intérieure du support, en particulier par un matériau adhésif pelable, de préférence semi-conducteur. Le positionnement du manchon sur l'élément se fait en enfilant sur cet élément le support retenant le manchon expansé, et en dégageant le support du dessous ou du dessus du manchon expansé.

Le support tubulaire rigide illustré dans cette figure 1 est constitué par une série de bagues annulaires 2, qui sont fermées mais présentent chacune une zone 3 de résistance réduite, dite zone de rupture, pour l'ouverture de chaque bague, et qui sont reliées chacune à la bague suivante par une attache résistante 4. Les bagues sont montrées formées par un jonc qui est de section circulaire mais peut être de section différente à condition qu'elle soit sans arête agressive saillante sur l'intérieur ou sur l'extérieur du support tubulaire.

Les zones de rupture 3 des différentes bagues sont centrées sur une même ligne génératrice 5 du support. Les attaches de liaison 4, des bagues les unes aux autres, s'étendent de manière globale alternativement d'un côté et de l'autre de cette ligne génératrice, les deux attaches de liaison entre l'une des bagues et les deux bagues de part et d'autre de celle considérée étant séparées par la zone de rupture sur la bague considérée.

Ces attaches 4 sont arquées, alternativement de manière inversée. Elles s'intercalent légèrement les unes entre les autres, en présentant des points de tangence entre elles sur la ligne génératrice 5. Elles sont solidarisées les unes aux autres en leurs points de tangence en définissant les zones de rupture des différentes bagues, chaque zone de rupture étant ici en biais sur la ligne génératrice 5.

L'une des deux bagues terminales du support, dite bague avant, présente un bras de traction 6, pourvu d'un anneau terminal 6A. Ce bras part sensiblement du point de rupture de cette bague avant, s'étend intérieurement sur la longueur du support et est saillant sur l'extrémité arrière du support En tirant sur ce bras depuis l'extrémité arrière du support, ainsi que symbolisé par la flèche F, on provoque l'ouverture de la bague avant et on la défait. Cette bague avant vient alors former une simple spire en hélice sur l'élément. En continuant à tirer selon la flèche F, de manière analogue on provoque l'ouverture de la bague suivante et on la défait. Cette bague suivante en se défaisant déroule en même temps la spire formée, par la bague avant précédemment défaite sur l'élément.

La traction prolongée selon cette flèche F provoque alternativement de manière répétitive la formation d'une spire unique sur l'élément et l'élimination immédiate de cette spire, au fur et à mesure que les bagues successives sont défaites.

Dans la variante de réalisation illustrée dans la figure 2, les références numériques désignent les mêmes éléments que dans la figure 1 et sont accompagnées du signe "prime" supplémentaire. Les différences que présentent ce support par rapport à celui de la figure 1 sont simplement précisées ci-après.

Les bagues 2' sont formées par un jonc de section rectangulaire ou carrée. Leurs attaches de liaison 4' sont sensiblement linéaires. Chacune d'elles vient en butée contre les deux attaches adjacentes situées de part et d'autre de celle considérée, le long de la ligne génératrice 5'. Ces attaches sont solidarisées en leurs points de contact le long de cette ligne génératrice en définissant entre elles les zones de rupture 3' sur les différentes bagues 2'. Les zones de rupture 3' sont alignées sur la ligne génératrice 5'.

Le support selon ces figures 1 et 2 est obtenue à partir d'un jonc métallique, plié en continu en zigzag pour définir un support plan initial, ajouré et de forme rectangulaire. Le support plan initial est ensuite roulé en forme de tube et alors soudé aux points de tangence ou de contact des bords de pliage du jonc.

En variante, le support plan initial ou le support tubulaire est en plastique et est réalisé par moulage. Le support plan initial est roulé en forme de tube et les points de contact ou de tangence sont soudés aux rayons ultraviolets ou à chaud.

Dans une autre variante, le support plan initial métallique ou en plastique est découpé dans une plaque pleine, en particulier pour la réalisation du support de la figure 2.

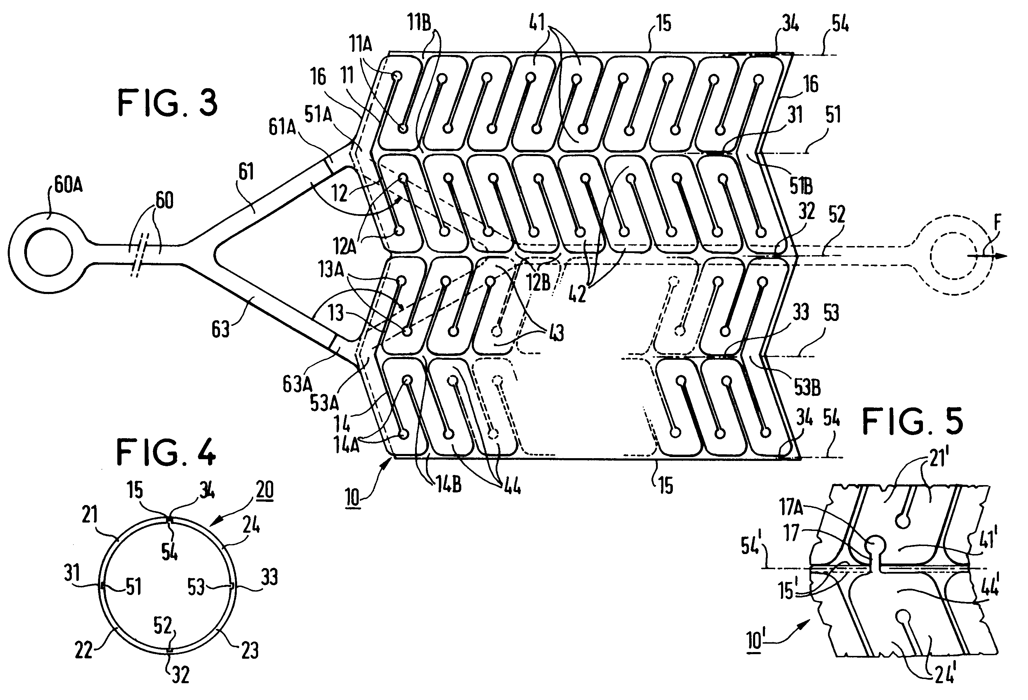

La figure 3 montre un mode préféré de réalisation du support selon l'invention. Le support tubulaire est représenté développé en plan ou est constitué par un support plan initial ou plaque 10. Ce support est en plastique et est réalisé par moulage. Le support plan initial est roulé en forme de tube et ainsi maintenu en particulier par l'un des modes d'assemblage décrit en regard des figures 4 et 5.

La plaque 10 comporte des jeux d'empreintes 11, 12, 13 et 14 sur l'une de ses faces. Ces jeux d'empreintes s'étendent côte à côte, chacun sur la longueur de la plaque et parallèlement à deux bords linéaires opposés 15 de la plaque, dits bords longitudinaux de cette plaque.

Les empreintes sont parallèles les unes aux autres dans un même jeu. De préférence en outre, comme illustré, elles sont inclinées en biais relativement à la direction définie par les bords longitudinaux 15 ou la direction perpendiculaire à ces bords longitudinaux et sont symétriques dans deux jeux adjacents. Leur inclinaison est de l'ordre de 20°, par rapport à cette direction perpendiculaire, dans un sens ou l'autre, selon l'un ou l'autre des deux jeux côte à côte considérés. Les deux bords latéraux de la plaque, désignés globalement sous la référence 16, sont divisés en tronçons successifs inclinés parallèlement aux empreintes des jeux successifs.

Cette plaque présente dans ce mode de réalisation quatre jeux d'empreintes 11 à 14. Ce nombre peut être différent, restant cependant relativement faible. En pratique il est au plus égal à huit et est pair quand les empreintes sont inclinées symétriquement d'un jeu à l'autre; il peut être pair ou impair quand les empreintes sont transversales aux bords 15.

Ces empreintes 11 à 14 ont l'une de leurs extrémités 11A à 14A, de forme arrondie, qui est non débouchante sur l'un ou l'autre des bords longitudinaux du jeu correspondant, et leur autre extrémité 11B à 14B légèrement évasée, qui débouche sur l'un ou l'autre des bords longitudinaux du jeu correspondant. Les premières extrémités 11A à 14A et les deuxièmes extrémités 11B à 14B des empreintes 11 à 14 sont alternées en regard ou sur un même bord longitudinal délimitant le jeu correspondant. Les empreintes de deux jeux côte à côte ont leurs deuxièmes extrémités 11B à 14B qui communiquent directement entre elles sur le bord longitudinal commun séparant ces deux jeux et leurs premières extrémités 11A à 14B, situées en regard du bord longitudinal de séparation de ces deux jeux, qui sont symétriques les unes des autres.

En variante les empreintes 11 à 14, qui laissent une fine pellicule de matière sur la plaque 10 au niveau du fond de chacune d'elles, sont percées et constituent des fentes.

La description du support selon la figure 3 est complétée en le considérant mis en forme de tube et en se référant à la figure 4.

Les jeux d'empreintes 11 à 14 définissent sur la périphérie du support une série de bagues annulaires 20 le long du tube. Ces bagues 20 sont parallèles les unes aux autres. Elles sont séparées les unes des autres par des lignes périphériques discontinues de rupture, constituées par les empreintes 11 à 14. Elles sont segmentées par des zones de rupture 31, 32, 33 et 34 sur chacune d'elles, qui les divisent en secteurs annulaires 21, 22, 23 et 24.

Les secteurs annulaires 21 à 24 sont organisés en autant de jeux que de jeux d'empreintes 11 à 14, le long du support, en définissant ensemble la série de bagues. Les secteurs annulaires 21 à 24 de chaque jeu sont parallèles aux empreintes 11 à 14 et sont inclinés comme elles.

Les zones de rupture 31 à 34 sur chaque bague annulaire 20 sont définies par d'autres empreintes réalisées sur la même face que les empreintes 11 à 14. Elles laissent une fine pellicule de matière entre les secteurs annulaires d'une même bague. Elles sont en outre alignées et rendues continues sur des lignes génératrices de rupture 51 à 54 du support, sensiblement d'une extrémité à l'autre du support. Les zones de rupture 34 sur la ligne génératrice 54 résultent de l'assemblage des deux bords longitudinaux 15 de la plaque 10, ces bords étant d'épaisseur réduite comme celle le long des lignes génératrices de rupture et étant superposés et assemblés, par soudure à chaud ou aux ultraviolets, comme illustré dans la figure 4.

Les secteurs annulaires 21 à 24 de chaque jeu sont reliés les uns aux autres par des attaches de liaison 41 à 44, selon le jeu considéré. Ces attaches de liaison sont définies le long des lignes génératrices de rupture, entre chacune de ces lignes et chaque première extrémité arrondie 11A à 14A des empreintes 11 à 14. Elles assurent la continuité des secteurs annulaires d'un même jeu, en définissant avec ceux-ci une nervure continue en forme de zigzags réguliers entre les deux lignes de rupture qui délimitent le jeu de secteurs annulaires considéré.

Les jeux de secteurs annulaires 21 à 24 sont de préférence associés deux par deux en formant un couple. Ceci est le cas pour les jeux de secteurs annulaires 21 et 22, comme 23 et 24. A cet effet, les secteurs annulaires terminaux de chaque couple sont sans zone de rupture entre eux mais sont rendus continus sur chacune des extrémités du support, en formant une zone de jonction 51A, 51B ou 53A, 53B, selon le couple considéré, sur chacune des deux parties terminales de la ligne génératrice de rupture 51 ou 53 correspondante.

Les zones de jonction 51A et 53A, situées à l'une des extrémités dite avant du support, sont reliées à des bras individuels de traction 61 et 63 chacun affecté à l'un des couples de jeux de secteurs annulaires 21-22 et 23-24. Ces bras sont destinés à tirer sur les bagues 20, selon la flèche F, depuis l'extrémité arrière du support, pour les défaire. Ils présentent, au voisinage du bord latéral 16 de ce côté, une zone de pliure 61A, 63A, selon le bras, pour le pliage des bras et leur retour par l'intérieur du support jusqu'à l'extrémité arrière du support.

Les bras 61 et 63 sont par ailleurs avantageusement reliés à un bras commun de traction 60 et ce dernier muni d'un anneau terminal 60A accessible sur l'extrémité arrière, comme illustré en pointillés dans la partie de droite de la figure 3.

Les zones de pliure 61A et 63A sont définies par une épaisseur locale moindre sur les bras 61 et 63, l'épaisseur des zones de pliure restant cependant supérieure à celle des empreintes 11 à 14 et des lignes génératrices de rupture 51 à 54, pour leur conférer une résistance suffisante. Elles s'étendent pratiquement jusqu'au bord correspondant 16, dont l'épaisseur est intermédiaire pour former une transition entre chacune des zones de pliure et la zone de jonction 51A ou 53A des secteurs annulaires terminaux 21 et 22 ou 23 et 24.

En variante les secteurs annulaires terminaux sont séparés les uns des autres par des zones de rupture et sont chacun couplé à un bras individuel de traction.

Le support tubulaire selon les figures 3 et 4 se défait de manière analogue au support de la figure 1, à ceci près que ses bagues se défont chacune en défaisant simultanément les différents secteurs annulaires que comporte la bague considérée, abstraction faite de la bague terminale avant. Ceci évite la formation de la spire unique mais complète qui provient du déroulement de chacune des bagues de rang impair du support de la figure 1 et qui est éliminée par le déroulement de la bague suivante de rang pair. Ceci réduit également, dans le même rapport que le nombre de secteurs annulaires sur chaque bague 20, la longueur défaite et extraite à l'extrémité arrière du support, cette longueur défaite et extraite étant celle des secteurs annulaires défaits et non pas celle des bagues complètes défaites.

En se référant à la figure 4, on comprend que la face du support rendu tubulaire, sur laquelle sont réalisées les différentes empreintes de rupture, est sa face intérieure. En variante ces empreintes peuvent être réalisées sur la face extérieure du support rendu tubulaire.

La figure 5 représente une variante d'assemblage des bords longitudinaux du support plan initial de la figure 3, noté 10', qui est adapté en conséquence et rendu tubulaire. Indépendamment de ce mode d'assemblage, le support 10' est identique au support illustré en plan dans la figure 3. Les éléments adaptés pour cet assemblage sont désignés par les mêmes références numériques accompagnées du signe "prime".

Cet assemblage est réalisé par agrafage. A cet effet, sur l'un des deux bords longitudinaux 15', on prévoit des pattes d'agrafage 17, qui sont saillantes en bout des attaches de liaison 44' et le long de ce bord. Sur l'autre bord longitudinal, on prévoit une même série d'empreintes d'agrafage non référencées, qui sont réalisées dans les attaches de liaison 41'et sont complémentaires des pattes d'agrafage venant s'y loger. Chacune des pattes 17 se termine par un bouton 17A, de même épaisseur que la patte mais de section circulaire ayant un diamètre légèrement plus grand que la largeur de la patte. Chaque empreinte d'agrafage a son extrémité opposée au bord 15' et dite intérieure ayant la même forme que celle du bouton qu'elle reçoit. Les pattes d'agrafage insérées dans ces empreintes d'agrafage sont encastrées dans la face intérieure ou en variante la face extérieure du support plan 10' rendu tubulaire.

A titre d'exemple on précise, en regard de la figure 3, que la plaque 10 est en particulier en polyéthylène et que son épaisseur est de 2 mm environ au niveau des secteurs annulaires 21 à 24, de 0,1 mm à 0,2 mm au niveau des empreintes 11 à 14, des lignes génératrices de rupture 51 à 53 et de chacun des bords longitudinaux 15, et de 1 mm environ au niveau des zones de pliure 61A et 63A des bras 61 et 63.

En complément donné en regard des figures 1, 2, 4 et 5, on précise également que deux supports tubulaires peuvent être montés côte à côte et recevoir deux manchons rétractables, ces manchons étant montés en expansion et avec un léger recouvrement l'un sur l'autre sur les deux extrémités alors avant accolées de ces deux supports. Le positionnement de ces deux manchons sur un élément cylindrique, se fait en enfilant sur l'élément ces deux supports tubulaires avec leurs deux manchons expansés et en défaisant l'un et l'autre des supports pour leur élimination, l'élimination des supports commençant pour les extrémités avant accolées des deux supports et étant effectuée pour chaque support depuis l'extrémité arrière de celui-ci.
En variante, relativement aux figures 1 à 5, on indique aussi que, lorsque ces supports assurent le maintien d'un manchon expansé contre leur surface intérieure, le bras de traction n'est plus replié intérieurement dans le support qui est défait en commençant par l'extrémité équipée de ce bras de traction.

## Revendications

**1/** Support de positionnement d'un manchon rétractable, constitué par un corps tubulaire rigide de maintien en expansion du manchon pour le positionnement ultérieur et la rétraction dudit manchon sur un élément, comportant une série de bagues annulaires, parallèles les unes aux autres sur la longueur dudit corps et pourvues chacune d'une part d'une zone de rupture et d'autre part d'une attache résistante de liaison à chaque bague adjacente, pour défaire les bagues successives par déroulement alterné dans un sens et l'autre lors d'une traction sur l'une des bagues terminales de la série, caractérisé en ce que lesdites bagues (20) comportent chacune plusieurs zones de rupture (31, 32, 33, 34), divisant chaque bague en secteurs annulaires (21, 22, 23, 24) de longueur sensiblement identique, ainsi que plusieurs attaches de liaison, les différentes zones de rupture des bagues de la série étant sensiblement alignées sur autant de différentes lignes génératrices (51, 52, 53, 54) et ces lignes génératrices délimitant entre elles le long dudit corps autant de différents jeux de secteurs annulaires, et en ce lesdites attaches de liaison (41, 42, 43, 44) sont associées deux à deux en étant séparées l'une de l'autre par l'une des zones de rupture et relient les secteurs annulaires adjacents les uns aux autres le long dudit corps.

**2/** Support selon la revendication 1, caractérisé en ce que lesdites attaches de liaison (41, 42, 43, 44) sont sensiblement parallèles aux différentes lignes génératrices (51, 52, 53, 54).

**3/** Support selon l'une des revendications 1 et 2, caractérisé en ce que lesdites bagues successives (20) sont séparées les unes des autres par des jeux longitudinaux d'empreintes (11, 12, 13, 14) sur ledit corps, lesdites empreintes étant discontinues sur la périphérie dudit corps, s'étendant sensiblement chacune entre l'une desdites lignes génératrices à une suivante sur ledit corps et ayant chacune une première extrémité (11A, 12A, 13A 14A) située en regard de l'une des deux lignes génératrices (51, 52, 53, 54) concernées, en étant séparée de cette ligne génératrice par l'une des attaches de liaison, et une deuxième extrémité (11B, 12B, 13B, 14B) située sur l'autre des deux lignes génératrices concernées.

**4/** Support selon la revendication 3, caractérisé en ce que les empreintes (11, 12, 13, 14) sont ouvertes sur leur longueur et forment des fentes.

**5/** Support selon l'une des revendications 3 et 4, caractérisé en ce que les premières extrémités des différentes empreintes (11, 12, 13, 14) sont arrondies et les deuxièmes extrémités évasées.

**6/** Support selon l'une des revendications 3 à 5, caractérisé en ce que lesdites empreintes (11, 12, 13, 14) et lesdits secteurs annulaires (21, 22, 23, 24) sont inclinés relativement au plan transversal du corps, les coupant individuellement, l'angle d'inclinaison étant alternativement dans un sens et dans le sens opposé sur deux secteurs annulaires successifs sur la même bague.

**7/** Support selon la revendication 6, caractérisé en ce que l'angle d'inclinaison est de l'ordre d'une vingtaine de degrés.

**8/** Support selon l'une des revendications 3 à 7, caractérisé en ce que les zones de ruptures (31, 32, 33, 34) sont continues sensiblement le long des lignes génératrices (51, 52, 53, 54).

**9/** Support selon l'une des revendications 3 à 8, caractérisé en ce que les jeux d'empreintes (11 à 14) et de secteurs annulaires (21 à 24) sont en nombre pair et en ce que les secteurs annulaires des deux bagues terminales du corps sont reliés en couple, pour chaque bague terminale, par une zone de jonction (51A, 51B, 53A, 53B) sur la ligne génératrice (51, 53) entre eux, et sont en outre reliés pour l'une seule des bagues terminales dite avant à un bras de traction (61, 63), solidaire de la zone de jonction entre chaque couple de secteurs annulaires de cette bague avant.

**10/** Support selon l'une des revendications 3 à 8, caractérisé en ce que les secteurs annulaires de l'une des bagues terminales du corps, dite bague avant, sont reliés à des bras individuels de traction, solidaires de chacun d'eux.

**11/** Support selon l'une des revendications 9 et 10, caractérisé en ce que chaque bras de traction (61, 63) présente une zone de pliure (61A, 63A) proche de la bague terminale avant, pour la pliure du bras sur lui-même autour de la bague avant et son passage par l'intérieur du corps au moins jusqu'à l'autre bague terminale opposée dite arrière.
